# EUROPEAN PATENT APPLICATION

(11) **EP 4 563 531 A1**
(43) Date of publication of application: **04.06.2025**
(21) Application number: 24747081.8
(22) Date of filing: 09.01.2024
(51) Int. Cl.: C01F 11/18, B01D 53/14, B09B 3/00, B09B 5/00, B09B 101/30, B09B 101/45

(54) **CARBONATED SLURRY PRODUCTION SYSTEM**

(30) Priority: 27.01.2023 JP 2023010845
(71) Applicant: Taiheiyo Cement Corporation, Bunkyo-ku Tokyo 112-8503 (JP)
(72) Inventor: NIIJIMA Shun, Tokyo 112-8503 (JP); SENGOKU Taiyo, Tokyo 112-8503 (JP); TERASAKI Jun-ichi, Tokyo 112-8503 (JP)
(74) Representative: Isarpatent
(86) International application number: PCT/JP2024/000140
(87) International publication number: WO 2024/157750

(57) **Abstract**

Provided is a carbonated slurry production system that can continuously and efficiently fix carbon dioxide in a slurry formed of calcium-containing powder and water, and that can easily and stably control an average retention time of the slurry. A carbonated slurry production system 1 comprising: a slurry tank 2 having a first slurry storage portion 10a,10b for contacting the slurry with a carbon dioxide-containing gas, a slurry supply device 3 for supplying a slurry containing a calcium-containing powder and water; a carbon dioxide-containing gas supply device 4 for supplying a carbon dioxide-containing gas at a pressure greater than atmospheric pressure to a gas phase 9a, 9b formed of the carbon dioxide-containing gas in the first slurry storage portion; carbonated slurry discharge device 5 for discharging the carbonated slurry; liquid surface measurement unit 6a, 6b, 6c for measuring the height of a liquid surface; and a slurry control device 7 for controlling the average retention time of the slurry based on the heights of the first liquid surface 8a, 8b and the second liquid surface 11a, 11b, 11c.

## Description

### Technical Field

The present invention relates to a carbonated slurry production system.

### Background Art

In recent years, in order to suppress global warming, a reduction in carbon dioxide emission has been an important issue.

In this connection, a technology of fixing carbon dioxide, which is recovered from an exhaust gas or the like generated in a cement production plant, in concrete or the like has been investigated.

Meanwhile, calcium-containing powder, for example, incineration ash generated at the time of incineration of municipal waste or the like, such as general waste or industrial waste, or clinker dust generated from a cement plant is effectively reused as a cement raw material from the viewpoints of resources and environmental protection.

As a method of removing chlorine in the incineration ash, the clinker dust, or the like in order to suitably utilize the incineration ash, the clinker dust, or the like as the cement raw material or the like, in Patent Literature 1, there is a description of a method of treating chlorine-containing ash, the method including: a washing step of washing chlorine-containing ash under stirring by adding water thereto; an ash slurry concentration step of adding a high polymer flocculant to an ash slurry obtained through the washing step to perform sedimentation separation; a first dehydration step of dehydrating a condensed slurry of ash discharged through the concentration step with a vacuum belt filter; a highly desalting step of dispersing a dehydrated cake of ash discharged through the dehydration step with water, adding a carbon dioxide-containing gas thereto, and warming the resultant; and a second dehydration step of dehydrating the slurry obtained through the highly desalting step with a filter press to provide a washed ash cake.

As a method capable of satisfactorily controlling and promoting a carbonation reaction by efficiently bringing slaked lime and carbon dioxide into contact with each other, in Patent Literature 2, there is a description of a method of producing calcium carbonate, the method including supplying, to a reaction tank, a liquid containing calcium hydroxide and an aid, and an exhaust gas containing carbon dioxide while mixing the liquid and the gas with an injector, in which a reaction liquid circulated through the reaction tank is used as the liquid containing calcium hydroxide.

### Citation List

### Patent Literature

[Patent Literature 1] JP 6252653 B1
[Patent Literature 2] JP 5426982 B2

### Summary of Invention

### Technical Problem

An object of the present invention is to provide a carbonated slurry production system that can continuously and efficiently fix carbon dioxide in a slurry formed of calcium-containing powder and water, and that can easily and stably control an average retention time of the slurry (average time period required for the slurry to be discharged as a carbonated slurry after its supply).

### Solution to Problem

The inventors of the present invention have made extensive investigations in order to achieve the above-mentioned object, and, as a result, have found that the above-mentioned object can be achieved by a carbonated slurry production system, including: a slurry tank configured to store a slurry; a slurry supply device configured to continuously supply the slurry to the slurry tank; a carbon dioxide-containing gas supply device configured to supply a carbon dioxide-containing gas; a carbonated slurry discharge device configured to continuously discharge a carbonated slurry; a liquid surface measurement unit configured to measure a height of a liquid surface of the slurry; and a slurry control device configured to control an average retention time of the slurry, wherein the slurry control device is configured to control the average retention time of the slurry by adjusting an amount of the slurry to be supplied per unit time and an amount of the carbonated slurry to be discharged per unit time based on a height of each of a first liquid surface and a second liquid surface measured with the liquid surface measurement unit. Thus, the inventors have completed the present invention.

That is, the present invention provides the following items [1] to [6].
[1] A carbonated slurry production system for producing a carbonated slurry formed by carbonation of a slurry containing calcium-containing powder and water by a carbon dioxide-containing gas, the carbonated slurry production system including: a slurry tank configured to store the slurry; a slurry supply device configured to continuously supply the slurry to the slurry tank; a carbon dioxide-containing gas supply device configured to supply the carbon dioxide-containing gas; a carbonated slurry discharge device configured to continuously discharge the carbonated slurry from the slurry tank; a liquid surface measurement unit configured to measure a height of a liquid surface of the slurry in the slurry tank; and a slurry control device configured to control an average retention time of the slurry, wherein the slurry tank includes a first slurry storage portion configured to store the slurry and the carbon dioxide-containing gas so that a gas phase formed of the carbon dioxide-containing gas is positioned above a first liquid surface of the slurry, to bring the slurry and the carbon dioxide-containing gas into contact with each other, and a second slurry storage portion configured to store the slurry and a gas (gas is different from the above-mentioned carbon dioxide-containing gas), so that a gas phase formed of the gas (gas is different from the above-mentioned carbon dioxide-containing gas) is positioned above a second liquid surface of the slurry, and a contact surface between the slurry and the carbon dioxide-containing gas is absent, wherein the carbon dioxide-containing gas supply device is configured to supply the carbon dioxide-containing gas to the gas phase formed of the carbon dioxide-containing gas in the first slurry storage portion at a pressure larger than an atmospheric pressure, wherein the liquid surface measurement unit is configured to measure a height of each of the first liquid surface of the first slurry storage portion and the second liquid surface of the second slurry storage portion, and wherein the slurry control device is configured to control the average retention time of the slurry by adjusting an amount of the slurry to be supplied from the slurry supply device per unit time and an amount of the carbonated slurry to be discharged from the carbonated slurry discharge device per unit time based on the height of each of the first liquid surface of the first slurry storage portion and the second liquid surface of the second slurry storage portion measured with the liquid surface measurement unit.
[2] The carbonated slurry production system according to the above-mentioned item [1], wherein the carbonated slurry production system further includes a slurry circulation path configured to circulate the carbonated slurry discharged from the slurry tank by returning at least part thereof to the slurry tank.
[3] The carbonated slurry production system according to the above-mentioned item [1] or [2], wherein the slurry tank includes a stirring unit configured to stir and mix the carbonated slurry in the slurry tank.
[4] The carbonated slurry production system according to any one of the above-mentioned items [1] to [3], wherein the carbonated slurry production system further includes a pH measurement unit configured to measure a pH of the carbonated slurry.
[5] The carbonated slurry production system according to any one of the above-mentioned items [1] to [4], wherein the carbonated slurry production system further includes a liquid temperature adjustment unit configured to adjusting a liquid temperature of the carbonated slurry.
[6] A method of producing a carbonated slurry formed by carbonation of a slurry containing calcium-containing powder and water by a carbon dioxide-containing gas, including: a slurry preparation step of mixing the calcium-containing powder and the water to provide the slurry; a slurry supply step of continuously supplying the slurry to a slurry tank configured to store the slurry; a slurry storage step of storing the slurry and the carbon dioxide-containing gas in a first slurry storage portion of the slurry tank so that a gas phase formed of the carbon dioxide-containing gas is positioned above a first liquid surface of the slurry, and storing the slurry and a gas (gas is different from the above-mentioned carbon dioxide-containing gas) in a second slurry storage portion of the slurry tank so that a gas phase formed of the gas (gas is different from the above-mentioned carbon dioxide-containing gas) is positioned above a second liquid surface of the slurry, and a contact surface between the slurry and the carbon dioxide-containing gas is absent; a carbonated slurry preparation step of supplying the carbon dioxide-containing gas to the gas phase formed of the carbon dioxide-containing gas in the first slurry storage portion at a pressure larger than an atmospheric pressure to bring the first liquid surface and the gas phase into contact with each other, to thereby carbonate the slurry to provide a carbonated slurry; a carbonated slurry discharge step of continuously discharging the carbonated slurry from the slurry tank; and a liquid surface measurement step of measuring a height of each of the first liquid surface of the first slurry storage portion and the second liquid surface of the second slurry storage portion, wherein an amount of the slurry to be supplied per unit time in the slurry supply step and an amount of the carbonated slurry per to be discharged unit time in the carbonated slurry discharge step are adjusted based on measurement results obtained in the liquid surface measurement step.

### Advantageous Effects of Invention

According to the carbonated slurry production system of the present invention, carbon dioxide can be continuously and efficiently fixed in a slurry containing calcium-containing powder and water, and the average retention time of the slurry (average time period required for the slurry to be discharged as a carbonated slurry after its supply) can be easily and stably controlled.

### Brief Description of Drawings

FIG. 1 is a view for schematically illustrating an example of a carbonated slurry production system of the present invention.
FIG. 2 is a view for schematically illustrating another example of the carbonated slurry production system of the present invention.

### Description of Embodiments

A carbonated slurry production system of the present invention is a carbonated slurry production system for producing a carbonated slurry formed by carbonation of a slurry containing calcium-containing powder and water by a carbon dioxide-containing gas. The carbonated slurry production system of the present invention includes: a slurry tank for storing the slurry; a slurry supply device for continuously supplying the slurry to the slurry tank; a carbon dioxide-containing gas supply device for supplying the carbon dioxide-containing gas; a carbonated slurry discharge device for continuously discharging the carbonated slurry from the slurry tank; a liquid surface measurement unit for measuring a height of a liquid surface of the slurry in the slurry tank; and a slurry control device for controlling an average retention time of the slurry. The slurry tank includes a first slurry storage portion for storing the slurry and the carbon dioxide-containing gas so that a gas phase formed of the carbon dioxide-containing gas is positioned above a first liquid surface of the slurry, to bring the slurry and the carbon dioxide-containing gas into contact with each other, and a second slurry storage portion for storing the slurry and a gas, which is different from the above-mentioned carbon dioxide-containing gas, so that a gas phase of the gas is positioned above a second liquid surface of the slurry, and a contact surface between the slurry and the carbon dioxide-containing gas is absent.

The carbon dioxide-containing gas supply device supplies the carbon dioxide-containing gas to the gas phase formed of the carbon dioxide-containing gas in the first slurry storage portion at a pressure larger than an atmospheric pressure. The liquid surface measurement unit measures a height of each of the first liquid surface of the first slurry storage portion and the second liquid surface of the second slurry storage portion. The slurry control device controls the average retention time of the slurry by adjusting an amount of the slurry to be supplied from the slurry supply device per unit time and an amount of the carbonated slurry to be discharged from the carbonated slurry discharge device per unit time based on the height of each of the first liquid surface of the first slurry storage portion and the second liquid surface of the second slurry storage portion measured with the liquid surface measurement unit.

The term "carbonation" as used herein refers to absorption and fixation of carbon dioxide.

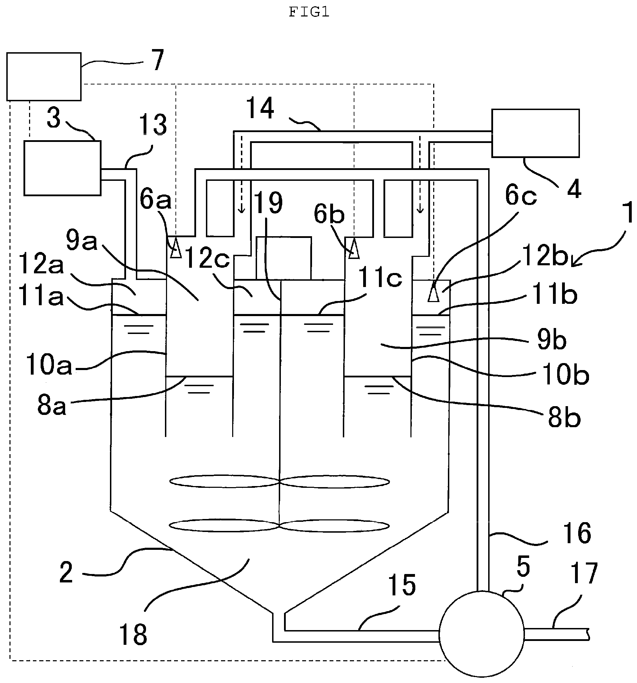

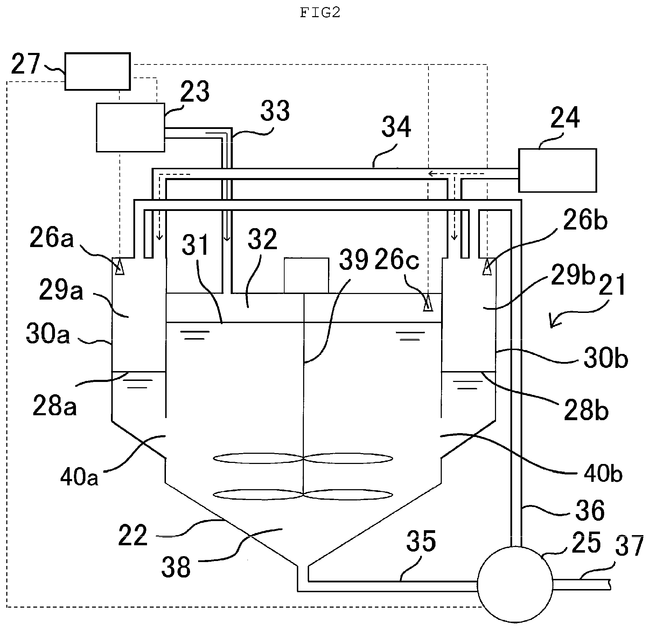

Carbonated slurry production systems 1 and 21 of the present invention are described in detail below with reference to FIG. 1 and FIG. 2.

In the present invention, the slurry to be carbonated is a mixture (slurry) containing calcium-containing powder and water.

The calcium-containing power is not particularly limited as long as the powder contains calcium, and examples thereof include cement, pulverized waste concrete, ready-mixed concrete sludge powder, blast furnace slug powder, municipal waste incinerated ash (fly ash, bottom ash), and cement kiln dust. Those powders may be used alone or in combination thereof.

The cement is not particularly limited, and examples thereof include: various Portland cements, such as ordinary Portland cement, high-early-strength Portland cement, moderate-heat Portland cement, and low-heat Portland cement; mixed cements, such as blast furnace cement and fly ash cement; and ECO cement.

The pulverized waste concrete is, for example, a powdery product containing hydrated cement and unhydrated cement obtained by crushing concrete waste generated when a concrete structure or the like is dismantled, and then removing aggregate from the crushed product. The content of CaO in the pulverized waste concrete is typically 15 mass% or more.

The ready-mixed concrete sludge powder is a powdery product containing hydrated cement and unhydrated cement obtained by sieving, with a sieve or the like, sludge generated in a production process for concrete in a ready-mixed concrete plant or a concrete product plant. The content of CaO in the ready-mixed concrete sludge is typically 30 mass% or more.

Examples of the blast furnace slag powder include: water-granulated slag obtained by rapidly cooling with water and crushing slag in a molten state produced as a by-product when pig iron is produced in a blast furnace; and air-cooled slag obtained by slowly cooling and crushing the slag. The content of CaO in the blast furnace slag powder is typically 35 mass% or more.

The content of calcium in the calcium-containing powder is preferably 15 mass% or more, more preferably 20 mass% or more, particularly preferably 30 mass% or more in terms of oxide (CaO). In the case where the content is 15 mass% or more, when the obtained carbonated slurry is used as part of a material for a cement composition such as concrete, the strength developability of the cement composition can be further improved. The upper limit value of the content is not particularly limited, but is typically 90 mass%.

The water is not particularly limited, and examples thereof include water from waterworks, industrial water, and recovered water, such as supernatant water or sludge water generated in a concrete production plant.

The water to calcium-containing powder ratio (mass ratio of the water to the calcium-containing powder (water/calcium-containing powder)) of the slurry, which varies depending on the application of the carbonated slurry or the target concentration of the carbonated slurry, is preferably from 0.2 to 10.0, more preferably from 0.4 to 9.5, still more preferably more than 0.6 and 9.0 or less, still more preferably from 1.0 to 8.5, still more preferably from 2.0 to 8.0, particularly preferably from 3.0 to 7.5.

When the water to calcium-containing powder ratio is 0.2 or more, the slurry is reduced in viscosity, and hence workability is improved. In addition, carbon dioxide can be continuously and stably absorbed and fixed in the slurry.

When the water to calcium-containing powder ratio is 10.0 or less, the application of the carbonated slurry becomes less likely to be limited, and when the carbonated slurry is blended as part of a material for concrete or the like, for example, adjustment of the amount of any other material (e.g., water) becomes easier. An excessive increase in size of a device can be prevented.

The calcium-containing powder and the water are prepared into a slurry by, for example, being stirred and mixed in a mixing tank (not shown) for mixing the calcium-containing powder and the water to provide a slurry, with a mixing unit, such as a stirring blade arranged in the mixing tank or a hand mixer. The prepared slurry is continuously supplied from slurry supply devices 3 and 23 to the slurry tanks 2 and 22 through slurry inflow paths 13 and 33.

A distributor or a nozzle may be arranged on at least one of the slurry inflow paths 13 and 33 or regions of the slurry tanks 2 and 22 to which the slurry is supplied for the purpose of, for example, further improving the efficiency of the carbonation.

The slurry tanks 2 and 22 include stirring units 19 and 39, respectively, for the purpose of preventing the calcium-containing powder in the slurry from precipitating in the slurry tank. Examples of the stirring unit include a stirring blade arranged in the slurry tank and a hand mixer.

The slurry tanks 2 and 22 have tapered shapes toward carbonated slurry discharge paths 15 and 35 (typically arranged on the lower portions of the slurry tanks 2 and 22 in a vertical direction), respectively, for the purpose of preventing the calcium-containing powder in the slurry from precipitating in the slurry tank.

The stirring unit may be omitted. The shape of the slurry tank is not particularly limited.

The slurry tanks 2 and 22 include: first slurry storage portions 10a, 10b, 30a, and 30b for storing the slurry (including the slurry that is partially carbonated in the carbonation process of the slurry) stored in the slurry tanks 2 and 22 and the carbon dioxide-containing gas so that gas phases 9a, 9b, 29a, and 29b each formed of the carbon dioxide-containing gas are positioned above first liquid surfaces 8a, 8b, 28a, and 28b of the slurry, to bring the slurry and the carbon dioxide-containing gas into contact with each other; and second slurry storage portions for storing the slurry and a gas (gas different from the above-mentioned the carbon dioxide-containing gas),so that gas phases 12a, 12b, 12c, and 32 (gas phases different from the above-mentioned gas phases each formed of the carbon dioxide-containing gas, typically, gas phases each formed of air) are positioned above second liquid surfaces 11a, 11b, 11c, and 31 of the slurry, and a contact surface between the slurry and the carbon dioxide-containing gas is absent.

The number of the first slurry storage portions in the slurry tanks 2 and 22 only needs to be at least 1, and may be 2 or more.

The first slurry storage portion may be arranged on the inner side of the slurry tank, or may be arranged on the outer side of the slurry tank.

For example, in FIG. 1, the first slurry storage portions 10a and 10b are arranged so that at least part of the first slurry storage portions are immersed in a slurry 18 stored in the slurry tank 2. The first slurry storage portions 10a and 10b may each be fixed to a lid portion the slurry tank 2, or may each be fixed to an inner wall portion of the slurry tank 2 with a part of the first slurry storage portion or with a fixing member (not shown).

The gas phases 12a, 12b, and 12c are continuous spaces. The second liquid surfaces 11a, 11b, and 11c are liquid surfaces of the slurry 18 except the first liquid surfaces 8a and 8b, and the heights of the second liquid surfaces 11a, 11b, and 11c are the same.

The slurry stored in each of the first slurry storage portions 10a and 10b passes through an inflow/outflow port opened at a position below a liquid surface (second liquid surface) of the slurry 18 stored in the slurry tank 2 (provided that the slurry stored in each of the first slurry storage portions 10a and 10b is excluded) in a vertical direction, the position being an end portion of each of the first slurry storage portions 10a and 10b in the vertical direction, to be stored in each of the first slurry storage portions 10a and 10b.

In FIG. 2, the first slurry storage portions 30a and 30b are arranged on outer wall portions of the slurry tank 22. The first slurry storage portions 30a and 30b may form one region of the outer wall of the slurry tank.

The slurry stored in each of the first slurry storage portions 30a and 30b passes through inflow/outflow ports 40a and 40b opened at a position below a liquid surface (second liquid surface) of a slurry 38 stored in the slurry tank 22 (provided that the slurry stored in each of the first slurry storage portions 30a and 30b is excluded) in a vertical direction, the position being an end portion of each of the first slurry storage portions 30a and 30b in the vertical direction, to be stored in each of the first slurry storage portions 30a and 30b.

In FIG. 2, the first slurry storage portions 30a and 30b and the slurry tank 22 are connected to each other at portions of the inflow/outflow ports 40a and 40b.

When the first slurry storage portion is arranged outside the slurry tank, an inflow/outflow path communicating from the inflow/outflow port of the first slurry storage portion to the inflow/outflow port of the slurry tank may be included. The inflow/outflow port of the slurry tank is typically arranged on the outer wall of the slurry tank at a position below the liquid surface (second liquid surface) of the slurry stored in the slurry tank in the vertical direction.

Part of the slurry stored in the slurry tank passes through the inflow/outflow port to be stored in the first slurry storage portion.

In the first slurry storage portion, when the slurry and the carbon dioxide-containing gas are brought into contact with each other (brought into contact with each other at an interface between the liquid surface and the gas phase) under an environment in which the pressure of the gas phase formed of the carbon dioxide-containing gas is larger than an atmospheric pressure (e.g., 0.02 MPa or more in terms of pressure difference), carbon dioxide can be absorbed and fixed in the slurry efficiently and in a larger amount.

The first slurry storage portion is typically a vessel having a pressurizable structure. When a carbon dioxide gas is supplied to the gas phase of the first slurry storage portion under pressure (the inner pressure of the first slurry storage portion is set to be larger than the atmospheric pressure), the amount of carbon dioxide to be fixed in the carbonated slurry is increased. Accordingly, a carbonated slurry in which a larger amount of carbon dioxide is fixed can be obtained.

A stirring unit such as a stirring blade may be arranged on the first slurry storage portion, and the slurry and the carbon dioxide-containing gas may be brought into contact with each other while the slurry is stirred with the stirring unit or the slurry is circulated with a circulating unit, from the viewpoint of absorbing and fixing carbon dioxide in the slurry efficiently and in a larger amount.

The carbon dioxide-containing gas is supplied from carbon dioxide-containing gas supply devices 4 and 24 to the gas phases 9a, 9b, 29a, and 29b each formed of the carbon dioxide-containing gas in the first slurry storage portions 10a, 10b, 30a, and 30b through carbon dioxide-containing gas inflow paths 14 and 34 at a pressure larger than the atmospheric pressure.

The inflow ports of the carbon dioxide-containing gas in the first slurry storage portions 10a, 10b, 30a, and 30b are each typically arranged at a position out of contact with the slurry (position above the first liquid surface in the vertical direction such as an upper portion (e.g., a lid) of the first slurry storage portion) from the viewpoint of preventing clogging caused by occurrence of scale.

The carbon dioxide-containing gas may be a gas formed only of carbon dioxide (carbon dioxide gas), but may be a gas containing carbon dioxide from the viewpoint of, for example, ease of availability.

The ratio of carbon dioxide in the carbon dioxide-containing gas is preferably 5 vol% or more, more preferably 10 vol% or more, still more preferably 20 vol% or more, still more preferably 50 vol% or more, still more preferably 80 vol% or more, particularly preferably 90 vol% or more. When the ratio is 5 vol% or more, the amount of carbon dioxide to be fixed in the slurry can be further increased. The time period required for preparation of the carbonated slurry can be further shortened.

Examples of the carbon dioxide-containing gas include a liquefied carbon dioxide gas, an exhaust gas (carbon dioxide gas concentration: about 20 vol%) generated in a cement production process, an exhaust gas (carbon dioxide gas concentration: about 20 vol%) generated in an iron production process, an exhaust gas (carbon dioxide gas concentration: about 10 vol%) generated in a thermal power generation process, and gases (carbon dioxide gas concentration: about 100 vol%) separated and recovered from those exhaust gases.

A difference between the gas phase to which the carbon dioxide-containing gas is supplied (the gas phase formed of the carbon dioxide-containing gas in the first slurry storage portion) and the atmospheric pressure is preferably from 0.02 MPa to 0.2 MPa, more preferably from 0.03 MPa to 0.18 MPa, particularly preferably from 0.04 MPa to 0.15 MPa. When the pressure is 0.02 MPa or more, the amount of carbon dioxide to be fixed in the slurry per unit time can be further increased, and hence the slurry can be carbonated more efficiently. Accordingly, the size of a device such as a carbonation tank can be further reduced. When the pressure is 0.2 MPa or less, an excessive increase in cost required for equipment can be prevented.

The slurry carbonated in the first slurry storage portion moves from the first slurry storage portion to a liquid phase formed of the slurry in the slurry tank (provided that the slurry stored in the first slurry storage portion is excluded) through the inflow/outflow port.

The term "liquid phase" as used herein refers to a concept encompassing a slurry obtained by mixing a liquid and a powder and granular material (specifically, the water and the calcium-containing powder).

The inflow/outflow port of the first slurry storage portion only needs to be an inflow/outflow port through which the slurry can move inside and outside the first slurry storage portion. The first slurry storage portion may include one inflow/outflow port, or may separately include an inflow port for causing the slurry to flow into the first slurry storage portion, and an outflow port for causing the slurry to flow out of the first slurry storage portion.

Carbonated slurry discharge devices 5 and 25 are devices for continuously discharging the slurry in which carbon dioxide is sufficiently fixed in the first slurry storage portions 10a, 10b, 30a, and 30b as the carbonated slurry (carbonated slurry in which a target amount of carbon dioxide is absorbed and fixed) from the slurry tanks 2 and 22. The carbonated slurry is discharged from the slurry tanks 2 and 22 through the carbonated slurry discharge paths 15, 17, 35, and 37.

The discharged carbonated slurry may be used as, for example, a material for a cement composition such as concrete.

Liquid surface measurement units 6a, 6b, 26a, and 26b are units for measuring the heights of the first liquid surfaces 8a, 8b, 28a, and 28b of the first slurry storage portions 10a, 10b, 30a, and 30b, respectively.

Liquid surface measurement units 6c and 26c are units for measuring the heights of the second liquid surfaces 11b and 31 of the second slurry storage portions in the slurry tanks 2 and 32, respectively.

The second slurry storage portion means a portion of the slurry tank in which any other slurry except the slurry stored in the first slurry storage portion is stored. The second liquid surface means the liquid surface of the liquid phase formed of the slurry in the slurry tank (provided that the slurry stored in the first slurry storage portion is excluded).

The gas phase formed of the carbon dioxide-containing gas in the first slurry storage portion has a pressure larger than that of the gas phase of the second slurry storage portion, and hence the height of the first liquid surface is typically a position below the height of the second liquid surface in the vertical direction.

When the pressures of the gas phases each of formed of the carbon dioxide-containing gas in a plurality of first slurry storage portions can be simultaneously controlled, for example, when the slurry tank includes the plurality of first slurry storage portions and when the carbon dioxide-containing gas is supplied to the plurality of first slurry storage portions with carbon dioxide-containing gas inflow paths branched from one carbon dioxide-containing gas inflow path, the height of the first liquid surface of only one of the plurality of first slurry storage portions may be measured with the liquid surface measurement unit.

Slurry control devices 7 and 27 are devices for controlling the average retention times of the slurry from the supply to the discharge (average time periods required for the slurry to be discharged as a carbonated slurry after its supply) by adjusting the amounts of the slurry to be supplied from the slurry supply devices 3 and 23 per unit time and the amounts of the carbonated slurry to be discharged from the carbonated slurry discharge devices 5 and 25 per unit time based on the heights (the heights of the first liquid surfaces and the heights of the second liquid surfaces) measured with the liquid surface measurement units 6a, 6b, 6c, 26a, 26b, and 26c.

When the carbonation of the slurry is continuously performed under pressure, the quality of the carbonated slurry to be obtained (e.g., the degree of the carbonation of the slurry) is affected by, for example, the average retention time of the carbonated slurry and the pressure of the gas phase formed of the carbon dioxide-containing gas, and hence it is difficult to control the average retention time of the carbonated slurry to be constant and to stably maintain the quality of the carbonated slurry. However, according to the present invention, the average retention time of the slurry can be easily and stably controlled, and hence a carbonated slurry that is sufficiently carbonated can be continuously produced by adjusting, for example, the amount of the slurry to be supplied per unit time and the amount of the carbonated slurry to be discharged per unit time based on the height measured with the liquid surface measurement unit.

More specifically, when the total amount of the slurry in the slurry tank is determined from the volume of the slurry tank (the first slurry storage portion and the second slurry storage portion) and the measurement results obtained from the liquid surface measurement unit, and when the amount of the slurry to be supplied per unit time and the amount of the carbonated slurry to be discharged per unit time are adjusted so that the total amount of the slurry becomes constant, the average retention time of the slurry can be stabilized, and hence a carbonated slurry that is sufficiently carbonated can be continuously produced.

In the slurry control device, the adjustment of the amount of the carbon dioxide-containing gas to be supplied from the carbon dioxide-containing gas supply device (in other words, the adjustment of the pressure of the gas phase formed of the carbon dioxide-containing gas in the first slurry storage portion by an increase or decrease in supply amount) may be performed in addition to the adjustment of the amount of the slurry to be supplied from the slurry supply device per unit time and the amount of the carbonated slurry to be discharged from the carbonated slurry discharge device per unit time.

The carbonated slurry production systems 1 and 21 include slurry circulation paths 16 and 36 for circulating the carbonated slurry discharged from the slurry tanks 2 and 22 by returning at least part thereof to the slurry tanks 2 and 22.

The slurry circulation path may be omitted.

A circulating unit such as a pump for circulation may be arranged on each of the slurry circulation paths 16 and 36 in order to circulate the carbonated slurry. In this case, the carbonated slurry discharge devices 5 and 25 may each double as the circulating unit. A distributor or a nozzle (not shown) may be arranged on at least one of the slurry circulation paths 16 and 36 or regions to which the slurry is supplied for the purpose of, for example, further improving the efficiency of the carbonation.

The circulation is typically performed until the slurry becomes the carbonated slurry in which a target amount of carbon dioxide is absorbed and fixed (carbonated slurry in which a sufficient amount of a carbon dioxide gas is absorbed and fixed) .

When the carbonation of the slurry is performed while the carbonated slurry is circulated, the amount of carbon dioxide to be fixed in the slurry per unit time can be further increased, and hence the slurry can be carbonated more efficiently. Even when the carbonation of the slurry is continuously performed, the adjustment of the time period required for the carbonation can be made easy.

The carbonated slurry circulated from the pump for circulation may be returned into the first slurry storage portion from the viewpoint of further improving the efficiency of the carbonation.

The carbonated slurry production system may include a liquid temperature adjustment unit (not shown) for adjusting a liquid temperature of the carbonated slurry.

The degrees of absorption and fixation of carbon dioxide in the slurry, and the properties of the carbonated slurry (e.g., a viscosity and the particle diameter of the calcium-containing powder in the carbonated slurry) are each affected by the temperature of the carbonated slurry (including a slurry in which at least part thereof stored in the slurry tank is carbonated). When the liquid temperature of the carbonated slurry is adjusted, carbon dioxide can be absorbed and fixed in the slurry more efficiently and in a larger amount, and the properties of the carbonated slurry can be more easily managed (adjusted).

The liquid temperature adjustment unit is not particularly limited as long as the liquid temperature adjustment unit includes a cooling unit and a heating unit. The liquid temperature adjustment unit may be arranged on, for example, the slurry tank or the slurry circulation path.

The liquid temperature adjustment unit adjusts the liquid temperature of the carbonated slurry based on the liquid temperature measured with a temperature measurement unit (not shown) for measuring the liquid temperature of the carbonated slurry. The temperature measurement unit may be appropriately arranged on, for example, the slurry tank or the slurry circulation path.

The liquid temperature of the carbonated slurry adjusted with the liquid temperature adjustment unit is preferably from 10°C to 50°C, more preferably from 20°C to 40°C. When the liquid temperature is 10°C or more, an excessive increase in cost required for equipment for cooling can be prevented. When the liquid temperature is 50°C or less, carbon dioxide can be absorbed and fixed in the slurry more efficiently and in a larger amount.

The liquid temperature adjustment unit or a liquid temperature measurement unit may be arranged on the mixing tank (not shown) for the purpose of adjusting the temperature of the slurry when supplied to the slurry tank.

The carbonated cement slurry production system may include a pH measurement unit (not shown) for measuring the pH of the carbonated slurry (including a slurry in which at least part thereof stored in the slurry tank is carbonated). Whether the carbonated slurry in which a target amount of carbon dioxide is absorbed and fixed is obtained (whether a sufficient amount of carbon dioxide gas is absorbed and fixed in the slurry) can be judged based on a measured value of the pH of the carbonated slurry.

For example, when the measured value of the pH of the carbonated slurry (the slurry in which at least part thereof stored in the slurry tank is carbonated) in the slurry tank falls within a predetermined numerical range set in advance, it is judged that a sufficient amount of a carbon dioxide gas is absorbed and fixed in the carbonated slurry, and hence the carbonated slurry in the slurry tank may be discharged as a carbonated slurry in which a target amount of carbon dioxide (carbon dioxide gas) is absorbed and fixed.

When the adjustment of the amount of the carbon dioxide-containing gas to be supplied from the carbon dioxide-containing gas supply device (in other words, the adjustment of the pressure of the gas phase formed of the carbon dioxide-containing gas in the first slurry storage portion by an increase or decrease in supply amount) and the adjustment of the circulation of the slurry are performed based on the measured value of the pH of the carbonated slurry, preparation of the carbonated slurry can be managed (adjusted).

With regard to the above-mentioned slurry control device, the amount of the slurry to be supplied from the slurry supply device per unit time and the amount of the carbonated slurry to be discharged from the carbonated slurry discharge device per unit time may each be adjusted based on the pH of the carbonated slurry measured with the pH measurement unit together with the heights (the height of the first liquid surface and the height of the second liquid surface) measured with the liquid surface measurement unit.

The pH measurement unit may be arranged on a member in which the carbonated slurry is accumulated or transferred, such as the slurry tank or the slurry circulation path.

The respective members for forming the above-mentioned carbonated slurry production system may include various measurement units, such as a temperature gauge for measuring the temperature of a gas phase portion in the slurry tank, a carbonate ion concentration measurement device, an oxygen concentration measurement device, a carbon dioxide concentration measurement device, and a pressure gauge, for the purpose of managing the preparation of the carbonated slurry.

The control with the slurry control device may be performed by using the results measured with the various measurement units.

An example of the method of producing the carbonated slurry formed by carbonation of the slurry containing the calcium-containing powder and the water by the carbon dioxide-containing gas, the method including using the above-mentioned carbonated slurry production system, is a method of producing a carbonated slurry, including: a slurry preparation step of mixing the calcium-containing powder and the water to provide a slurry; a slurry supply step of continuously supplying the slurry to the slurry tank for storing a slurry; a slurry storage step of storing the slurry and the carbon dioxide-containing gas in the first slurry storage portion of the slurry tank so that the gas phase formed of the carbon dioxide-containing gas is positioned above the first liquid surface of the slurry, and storing the slurry and a gas, which is different from the above-mentioned the carbon dioxide-containing gas, in the second slurry storage portion of the slurry tank so that a gas phase of the gas, which is different from the above-mentioned the carbon dioxide-containing gas, is positioned above the second liquid surface of the slurry and a contact surface between the slurry and the carbon dioxide-containing gas is absent; a carbonated slurry preparation step of supplying the carbon dioxide-containing gas to the gas phase formed of the carbon dioxide-containing gas in the first slurry storage portion at a pressure larger than the atmospheric pressure to bring the first liquid surface and the gas phase into contact with each other, to thereby carbonate the slurry to provide the carbonated slurry; a carbonated slurry discharge step of continuously discharging the carbonated slurry from the slurry tank; and a liquid surface measurement step of measuring the heights of the first liquid surface of the first slurry storage portion and the second liquid surface of the second slurry storage portion, wherein the amount of the slurry to be supplied in the slurry supply step per unit time and the amount of the carbonated slurry to be discharged per unit time in the carbonated slurry discharge step are adjusted based on the measurement results obtained in the liquid surface measurement step.

### Reference Signs List

1, 21 carbonated slurry production system
2, 22 slurry tank
3, 23 slurry supply device
4, 24 carbon dioxide-containing gas supply device
5, 25 carbonated slurry discharge device
6a, 6b, 6c, 26a, 26b, 26c liquid surface measurement unit
7, 27 slurry control device
8a, 8b, 28a, 28b first liquid surface
9a, 9b, 29a, 29b gas phase formed of carbon dioxide-containing gas
10a, 10b, 30a, 30b first slurry storage portion
11a, 11b, 11c, 31 second liquid surface
12a, 12b, 12c, 32 gas phase
13, 33 slurry inflow path
14, 34 carbon dioxide-containing gas inflow path
15, 17, 35, 37 carbonated slurry discharge path
16, 36 slurry circulation path
18, 38 slurry (including slurry in which part thereof is carbonated)
19, 39 stirring unit
40a, 40b inflow/outflow port

## Claims

1. A carbonated slurry production system for producing a carbonated slurry formed by carbonation of a slurry containing calcium-containing powder and water by a carbon dioxide-containing gas, the carbonated slurry production system comprising:
a slurry tank configured to store the slurry;
a slurry supply device configured to continuously supply the slurry to the slurry tank;
a carbon dioxide-containing gas supply device configured to supply the carbon dioxide-containing gas;
a carbonated slurry discharge device configured to continuously discharge the carbonated slurry from the slurry tank;
a liquid surface measurement unit configured to measure a height of a liquid surface of the slurry in the slurry tank; and
a slurry control device configured to control an average retention time of the slurry,
wherein the slurry tank includes
a first slurry storage portion configured to store the slurry and the carbon dioxide-containing gas so that a gas phase formed of the carbon dioxide-containing gas is positioned above a first liquid surface of the slurry, to bring the slurry and the carbon dioxide-containing gas into contact with each other, and
a second slurry storage portion configured to store the slurry and a gas so that a gas phase formed of the gas is positioned above a second liquid surface of the slurry, and a contact surface between the slurry and the carbon dioxide-containing gas is absent,
wherein the carbon dioxide-containing gas supply device is configured to supply the carbon dioxide-containing gas to the gas phase formed of the carbon dioxide-containing gas in the first slurry storage portion at a pressure larger than an atmospheric pressure,
wherein the liquid surface measurement unit is configured to measure a height of each of the first liquid surface of the first slurry storage portion and the second liquid surface of the second slurry storage portion, and
wherein the slurry control device is configured to control the average retention time of the slurry by adjusting an amount of the slurry to be supplied from the slurry supply device per unit time and an amount of the carbonated slurry to be discharged from the carbonated slurry discharge device per unit time based on the height of each of the first liquid surface of the first slurry storage portion and the second liquid surface of the second slurry storage portion measured with the liquid surface measurement unit.

2. The carbonated slurry production system according to claim 1, wherein the carbonated slurry production system further comprises a slurry circulation path configured to circulate the carbonated slurry discharged from the slurry tank by returning at least part thereof to the slurry tank.

3. The carbonated slurry production system according to claim 1 or 2, wherein the slurry tank includes a stirring unit configured to stir and mix the carbonated slurry in the slurry tank.

4. The carbonated slurry production system according to claim 1 or 2, wherein the carbonated slurry production system further comprises a pH measurement unit configured to measure a pH of the carbonated slurry.

5. The carbonated slurry production system according to claim 1 or 2, wherein the carbonated slurry production system further comprises a liquid temperature adjustment unit configured to adjust a liquid temperature of the carbonated slurry.

6. A method of producing a carbonated slurry formed by carbonation of a slurry containing calcium-containing powder and water by a carbon dioxide-containing gas, comprising:
a slurry preparation step of mixing the calcium-containing powder and the water to provide the slurry;
a slurry supply step of continuously supplying the slurry to a slurry tank configured to store the slurry;
a slurry storage step of storing the slurry and the carbon dioxide-containing gas in a first slurry storage portion of the slurry tank so that a gas phase formed of the carbon dioxide-containing gas is positioned above a first liquid surface of the slurry, and storing the slurry and a gas in a second slurry storage portion of the slurry tank so that a gas phase formed of the gas is positioned above a second liquid surface of the slurry, and a contact surface between the slurry and the carbon dioxide-containing gas is absent;
a carbonated slurry preparation step of supplying the carbon dioxide-containing gas to the gas phase formed of the carbon dioxide-containing gas in the first slurry storage portion at a pressure larger than an atmospheric pressure to bring the first liquid surface and the gas phase into contact with each other, to thereby carbonate the slurry to provide a carbonated slurry;
a carbonated slurry discharge step of continuously discharging the carbonated slurry from the slurry tank; and
a liquid surface measurement step of measuring a height of each of the first liquid surface of the first slurry storage portion and the second liquid surface of the second slurry storage portion,
wherein an amount of the slurry to be supplied per unit time in the slurry supply step and an amount of the carbonated slurry to be discharged per unit time in the carbonated slurry discharge step are adjusted based on measurement results obtained in the liquid surface measurement step.
